# EUROPÄISCHE PATENTSCHRIFT

(11) **EP 3 036 447 B1**
(45) Veröffentlichungstag und Bekanntmachung des Hinweises auf die Patenterteilung: **08.02.2017**
(21) Anmeldenummer: 14755347.3
(22) Anmeldetag: 18.08.2014
(51) Int. Cl.: F16C 32/06, F01D 25/04, F01D 25/16

(54) **AEROSTATISCHES LAGER FÜR EINEN ROTOR, INSBESONDERE IN EINER AUSWUCHTMASCHINE**
AEROSTATIC BEARING FOR A ROTOR, IN PARTICULAR IN A BALANCING MACHINE
PALIER AÉROSTATIQUE DESTINÉ À UN ROTOR, EN PARTICULIER DANS UNE MACHINE D'ÉQUILIBRAGE

(30) Priorität: 20.08.2013 DE 102013108956
(43) Veröffentlichungstag der Anmeldung: 29.06.2016
(73) Patentinhaber: Schenck RoTec GmbH, 64293 Darmstadt (DE)
(72) Erfinder: THELEN, Dieter, 64397 Modautal (DE)
(74) Vertreter: Haar, Lucas Heinz Jörn
(86) Internationale Anmeldenummer: PCT/EP2014/067534
(87) Internationale Veröffentlichungsnummer: WO 2015/024888

(56) Entgegenhaltungen:
- EP-A1- 2 249 051
- EP-A2- 1 623 201
- EP-A2- 1 803 968
- DE-A1- 2 448 785
- US-A- 2 951 729
- US-B1- 6 439 773

## Beschreibung

Die Erfindung betrifft ein aerostatisches Lager für einen drehbaren Rotor, der eine Drehachse und eine sich zur Drehachse radial erstreckende Lagerfläche aufweist, mit einem nicht drehbar in einem Gehäuse angeordneten Lagerelement, das eine mit der Lagerfläche zusammenwirkende Gegenlagerfläche und wenigstens einen in der Gegenlagerfläche mündenden Zuführkanal aufweist.

Aerostatische Lager sind Lager, bei denen die zwei sich gegeneinander bewegenden Partner durch einen dünnen Luftfilm voneinander getrennt sind. Der trennende Luftfilm wird durch Einleiten von Druckluft in den Lagerspalt erzeugt. Aerostatische Lager eignen sich sehr gut zur Lagerung eines Rotors in einer Auswuchtmaschine, da sie einen sehr gleichmäßigen, störungsarmen Lauf des Rotors bewirken und dadurch eine präzise Unwuchtmessung ermöglichen. Ein bei aerostatischen Lagern bestehendes Problem ist ihre Neigung zu selbsterregten Schwingungen. Hierdurch kann sich, z.B. bei Axiallagern mit vertikaler Drehachse ein Zustand ergeben, bei dem der Rotor nicht ruhig auf dem Lagermedium schwimmt, sondern periodische Auf- und Abbewegungen ausführt. Bei gehobener Rotorposition und vergrößertem Lagerspalt kann mehr gasförmiges Lagermedium und darin gespeicherte Druckenergie aus dem Lagerspalt nach außen abströmen, so dass die den Rotor tragende Lagerkraft sinkt und im nächsten Moment bei abgesenktem Rotor erneut ein den Rotor tragendes Luftpolster gebildet wird. Danach beginnt dieser Zyklus erneut. Dieses Verhalten von aerostatischen Axiallagern ist auch unter dem Begriff "Lufthammer" bekannt, da der Rotor in seiner Lagerung wie ein Hammer Vertikalbewegungen ausführt.

Die beschriebene Neigung zur Ausführung selbsterregter Schwingungen steigt mit zunehmender Belastung des Lagers, da mit der Belastung der Druck im Lagerspalt und damit die gespeicherte Druckenergie zunimmt. Das Erreichen der Stabilitätsgrenze, ab der die selbsterregten Schwingungen auftreten, hängt von verschiedenen Faktoren, wie den geometrischen Parametern der Lagerung, der Lagerspalthöhe, dem Durchmesser der Luftzuführbohrungen und anderen ab. Die Lage der Stabilitätsgrenze wird durch schwingungsdämpfende Effekte an der Lagerstelle beeinflusst, die aerostatischen Lagern immanent sind und aus der Atmungsbewegung im Lagerspalt resultieren. Die Stabilitätsgrenze kann zu höheren Belastungen hin verschoben werden, wenn es gelingt, die Schwingungsdämpfung durch äußere Maßnahmen zu verstärken.

Bei einer aus DE 24 48 785 A1 bekannten Kombination eines axial belasteten Wälzlagers mit einem hydrostatischen Axiallager ist das hydrostatische Axiallager über einen Kolben im Gehäuse abgestützt, wobei Drucköl von einem Kolbenraum über eine gedrosselte Verbindungsleitung zum hydrostatischen Axiallager geführt wird. Der Außenring des Wälzlagers ist im Gehäuse verschiebbar und seine kraftübertragende Stirnseite ruht auf einer kolbenähnliche Büchse, die auf der dem Außenring abgewandten Seite eine als hydrostatisches Steuerlager ausgebildete Stirnfläche aufweist und einen mit dem Kolbenraum verbundenen Öldruckraum begrenzt. Die mit Drucköl beaufschlagten Wirkflächen des hydrostatischen Axiallagers und der den Außenring abstützenden Buchse bewirken eine Verteilung der axialen Lagerbelastung entsprechend ihrem Wirkflächenverhältnis. Das Problem selbsterregter Axialschwingungen des hydrostatischen Axiallagers besteht bei dieser Kombination nicht, da das Wälzlager solche Schwingungen verhindert.

Aus US 3 476 451 A ist eine aerostatische Lagerung für eine Welle bekannt, bei der auf der Welle zwei konische Lagerkörper einander entgegengesetzt angeordnet sind, die in passenden Lagerelementen aufgenommen sind. Die Lagerelemente sind in Gehäusebohrungen axial und radial beweglich aufgenommen und mittels radiale Schwingungsbewegungen dämpfenden Dichtringen abgedichtet.

Es ist weiterhin aus DE 10 2010 036 954 A1 eine Vorrichtung zum dynamischen Messen der Unwucht einer Rotors einer Turboladerrumpfgruppe bekannt, bei welcher ein Mittelgehäuse der Turboladerrumpfgruppe in einem Zwischenraum zwischen einem Turbinengehäuse und einem Verdichtergehäuse der Vorrichtung angeordnet und mittels axial und radial federnder Mittel in zwei Raumrichtungen bewegbar an diesen gehalten ist. Der Rotor der Turboladerrumpfgruppe ist hierbei auf nicht näher angegebene Weise in dem Mittelgehäuse drehbar gelagert.

Der Erfindung liegt die Aufgabe zugrunde, bei einem aerostatischen Lager der eingangs genannten Art eine verbesserte Dämpfung der Schwingung des Rotors in axialer Richtung zu schaffen und die belastungsabhängige Stabilitätsgrenze in Richtung höherer Belastungen zu verschieben.

Die genannte Aufgabe wird durch ein aerostatisches Lager mit den in Patentanspruch 1 angegebenen Merkmalen gelöst. Vorteilhafte Ausgestaltungen des Lagers sind in den Unteransprüchen angegeben.

Das aerostatische Lager nach der Erfindung ist für einen drehbaren Rotor mit einer Drehachse und einer sich zur Drehachse radial erstreckenden Lagerfläche bestimmt und weist ein nicht drehbar in einem Gehäuse angeordnetes Lagerelement auf, das eine mit der Lagerfläche zusammenwirkende Gegenlagerfläche und wenigstens einen in der Gegenlagerfläche mündenden Zuführkanal hat, wobei das Lagerelement in Richtung der Drehachse durch die seine Lage im Gehäuse bestimmenden, einander entgegen gerichteten Kräfte bewegbar und mit einem Dämpfungskörper in Wirkeingriff ist, der zur Schwingungsdämpfung der axialen Bewegungen des Lagerelements ausgebildet ist. Das Lagerelement bildet hierbei mit einer der Gegenlagerfläche abgewandten Seite eine Wirkfläche, die größer ist als die Gegenlagerfläche und die eine Gehäusekammer, von der der Zuführkanal vorzugsweise ausgeht, für unter Druck zugeführte Luft begrenzt, wobei die axiale Bewegung des Lagerelements, auf der die Gegenlagerfläche aufweisenden Seite durch einen im Gehäuse angeordneten Anschlag begrenzt ist, der einen mit dem Lagerelement in Wirkeingriff stehenden nachgiebigen Dämpfungskörper aufweist.

Bei dem Lager nach der Erfindung wird das Lagerelement bei einer Änderung seiner Belastung infolge selbsterregter Schwingungen ebenfalls in schwingende Axialbewegungen versetzt. Das Lagerelement ist somit Teil des schwingenden Systems. Durch den Wirkeingriff des Lagerelements mit einem Dämpfungskörper werden die Schwingungen des Lagerelements jedoch gedämpft. Die Wirkung dieser Dämpfung überträgt sich unmittelbar auf die Druckschwankungen im Lagerspalt und bewirkt dadurch auch eine Dämpfung der Schwingungen des gelagerten Rotors. Auf diese Weise wird eine Verlagerung der belastungsabhängigen Stabilitätsgrenze des Lagers in höhere Belastungsbereich erzielt und die Gefahr einer Instabilität des Lagers wird deutlich reduziert.

Bei dieser Ausgestaltung wird das Lagerelement durch die auf seine Wirkfläche einwirkende aerostatische Kraft einerseits und durch die dieser Kraft entgegen gerichtete Kraft des nachgiebigen Dämpfungskörpers andererseits in seiner Lage im Gehäuse bestimmt, wobei Lageänderungen infolge von Druckschwankungen im Lagerspalt durch die Wirkung des Dämpfungskörpers gedämpft werden. Reicht die aerostatische Kraft nicht aus, so kann zusätzlich in der Gehäusekammer eine Druckfeder angeordnet sein, die das Lagerelement gegen den Dämpfungskörper drückt.

Die Ausgestaltung hat den Vorteil, dass durch die Beaufschlagung der Wirkfläche mit dem Druck der zugeführten Luft die auf das Lagerelement einwirkende Kraft in einem festen Verhältnis zu dem hydrostatischen Druck im Lagerspalt steht und sich damit automatisch an Änderungen des Zuführdrucks und damit des aerostatischen Lagerspaltdruck anpassen kann.

In einer anderen Ausgestaltung der Erfindung kann das Lagerelement auf der Seite der Gegenlagerfläche an einer ersten Feder und auf der der Gegenlagerfläche abgewandten Seite an einer zweiten Feder abgestützt sein, wobei beide Federn gegeneinander gespannt sind und wenigstens eine der Federn ein Dämpfungskörper ist. Bei dieser Ausführungsvariante verändern Druckschwankungen im Lagerspalt das Gleichgewicht der am Lagerelement wirksamen Kräfte und verursachen Axialbewegungen des Lagerelements, die durch den Dämpfungskörper gedämpft werden und eine Dämpfung selbsterregter Axialschwingungen des Rotors bewirken.

Das Lagerelement kann nach der Erfindung eine zylindrische Dichtfläche aufweisen, an der es mittels eines elastomeren Rings gegenüber dem Gehäuse abgedichtet ist. Die gedämpfte Federwirkung des elastomeren Rings und gegebenenfalls auftretende Reibung zwischen dem Lagerelement und dem elastomeren Ring können ebenfalls zur Dämpfung von Axialbewegungen des Lagerelements beitragen. Auch der Dämpfungskörper besteht vorzugsweise aus einem Elastomer und kann die Form eines Ringes haben.

Besonders vorteilhaft ist eine Ausgestaltung, bei der das Lagerelement von einer zylindrische Buchse, die in einer Bohrung des Gehäuses gelagert ist, und einem ringförmigen Flansch gebildet ist, der an einem Ende der Buchse angeordnet ist. Diese Ausgestaltung ermöglicht eine exakte und lagestabile Führung des Lagerelements in axialer Richtung und eine einfache Abdichtung des Lagerelements gegenüber dem Gehäuse.

Nach einem weiteren Vorschlag der Erfindung umfasst das Lager weiterhin ein den Rotor lagerndes aerostatisches Radiallager. Das aerostatische Radiallager kann zwei Lagerabschnitte haben, die auf beiden Seiten oder gemeinsam auf einer Seite des Lagerelements angeordnet sein können.

Das Lager nach der Erfindung ist in erster Linie für Lagerungen mit vertikaler Drehachse bestimmt. Es kann aber auch bei Lagerungen mit horizontaler Drehachse vorteilhaft sein, bei denen der Rotor in axialer Richtung belastet ist.

Eine bevorzugte Verwendung des Lagers nach der Erfindung ist die Lagerung von auszuwuchtenden Rotoren, insbesondere von Turboladerrotoren, in einer Auswuchtmaschine.

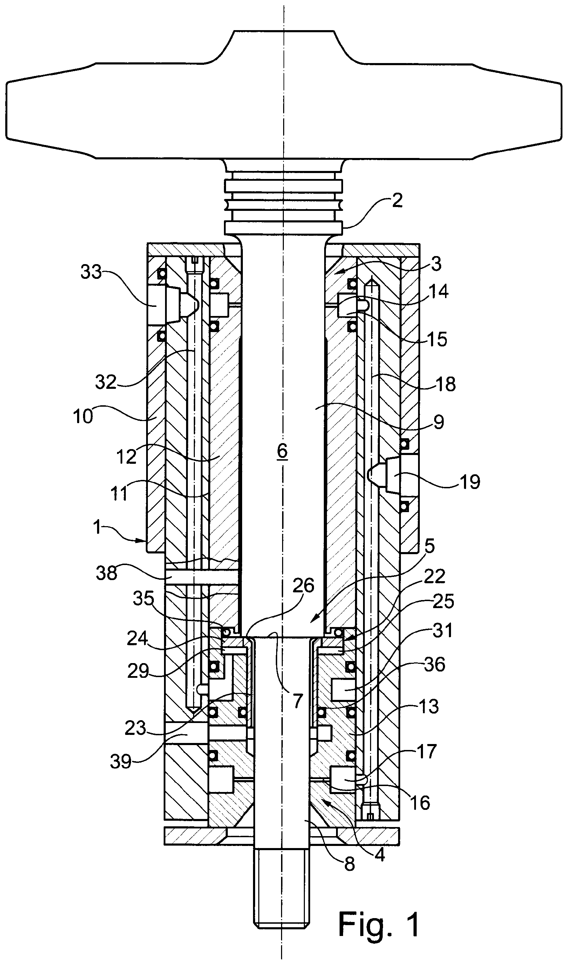

Ein Ausführungsbeispiel der Erfindung wird nachfolgend anhand Zeichnung näher erläutert. Es zeigen
- Figur 1: einen Querschnitt durch ein aerostatisches Lager nach der Erfindung zur Lagerung eines Turboladerrotors in einer Auswuchtmaschine und

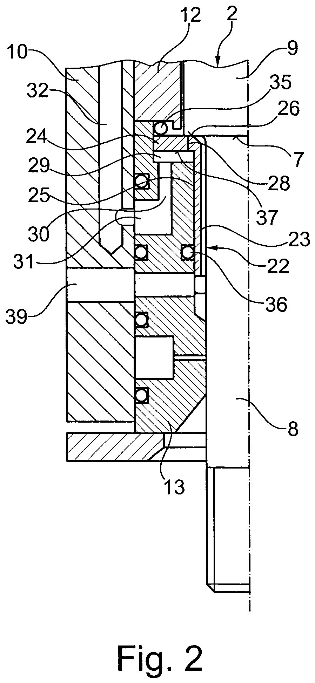

- Figur 2: einen vergrößerten Ausschnitt des Lagers gemäß Figur 1.

Das in der Zeichnung dargestellte aerostatische Lager 1 ist für den Einbau in einer Auswuchtmaschine bestimmt und dient zur Lagerung von in Turboladern verwendeten Rotoren 2, die in der Auswuchtmaschine mit vertikaler Drehachse zur Unwuchtmessung betrieben werden. Aus Gründen der Messgenauigkeit werden für derartige Anwendungsfälle überwiegend aerostatische Lager verwendet. Das Lager 1 umfasst zwei Radiallager 3, 4 und ein Axiallager 5. Aufgabe der Radiallager 3, 4 ist es, die unwuchtbedingten Fliehkräfte auf die Messeinrichtung der Auswuchtmaschine zu übertragen. Das Axiallager 5 dient zur Aufnahme des Rotorgewichts.

Die Belastung der Radiallager 3, 4 durch die unwuchtbedingten Fliehkräfte ist sehr gering, so dass an den Radiallagern 3, 4 keine Stabilitätsprobleme auftreten. Das Axiallager 5 kann dagegen relativ hoch belastet sein. Aufgrund der Bauweise der Turbolader steht an einer Welle 6 der Rotors 2 als präzise bearbeitete Lagerfläche 7 nur eine Wellenstufe zwischen einem Wellenteil 8 zur Befestigung eines Verdichterlaufrades und einem dickeren Wellenteil 9 für die im Turbolader der Rotorlagerung dienenden Gleitlager zur Verfügung. Die Lagerfläche 7 ist üblicherweise relativ klein, so dass relativ hohe Lagerbelastungen entstehen und die Gefahr einer Instabilität des Axiallagers 5 daher gegeben ist. Die durch Instabilität hervorgerufene Neigung zu selbsterregten Schwingungen des Axiallagers 5 kann durch die weiter unten beschriebenen Mittel zur Schwingungsdämpfung verringert werden.

Das Lager 1 weist ein Gehäuse 10 mit einer zylindrischen Gehäusebohrung 11 auf, in der nebeneinander und aneinander anstoßend eine erste Lagerhülse 12 und eine zweite Lagerhülse 13 angeordnet und befestigt sind. Die Lagerhülse 12 bildet mit ihrem oberen Ende das Radiallager 3. Sie weist hierzu einen zylindrischen Bohrungsabschnitt von etwas geringerem Innendurchmesser auf, der eine Radiallagerfläche für den Wellenteil 9 bildet. In der Radiallagerfläche münden mehrere, sich radial erstreckende Kapillarbohrungen 14, die an einer Ringnut 15 in der Lagerhülse 12 angeschlossen sind und zugeführte Druckluft in das Radiallager 3 leiten. Die Lagerhülse 13 ist in analoger Weise nahe ihrem unteren Ende zur Bildung des Radiallagers 4 mit einer Radiallagerfläche versehen, in der mehrere Kapillarbohrungen 16 münden, die an eine Ringnut 17 angeschlossen sind. Die Ringnuten 15, 17 werden über einen axialen Luftkanal 18 im Gehäuse 10 gespeist, der an einem Anschluss 19 an eine Druckluftquelle für die Radiallager 3, 4 anschließbar ist.

Das Axiallager 5 wird von der Lagerfläche 7 der Wellenstufe der Welle 6 und einem Lagerelement 22 gebildet. Das Lagerelement 22 besteht aus einer zylindrischen Buchse 23 und einem am oberen Ende der Buchse 23 angeordneten, ringförmigen Flansch 24, der sich von der Buchse 23 radial nach außen erstreckt.

Das Lagerelement 22 ist in einer Stufenbohrung 25 in der Lagerhülse 13 angeordnet und axial bewegbar geführt. Die Buchse 23 umgibt mit ihrer Bohrung mit etwas Spiel den Wellenteil 8 und der Flansch 24, dessen Außendurchmesser größer ist als der Innendurchmesser der Lagerhülse 12, liegt mit seinem äußeren Rand dem unteren Ende der Lagerhülse 12 gegenüber. Mit seiner der Lagerhülse 12 zugekehrten ebenen und zur Buchsenachse senkrechten Fläche bildet der Flansch 24 eine mit der Lagerfläche 7 des Rotors 2 zusammenwirkende Gegenlagerfläche 26. Durch den Flansch 24 erstrecken sich mehrere Zuführkanäle 28 in Form von Kapillarbohrungen oder Drosselbohrungen. Die Zuführkanäle 28 münden in einem von der Lagerfläche 7 überdeckten Bereich der Gegenlagerfläche 26 und sind an eine Gehäusekammer 29 angeschlossen, die sich auf der der Gegenlagerfläche 26 abgekehrten Unterseite des Flansches 24 befindet.

Die Gehäusekammer 29 ist über eine Bohrung 30 an eine in der Lagerhülse 13 ausgebildete Ringnut 31 angeschlossen, die über einen Kanal 32 im Gehäuse 10 mit einem Anschluss 33 zur Zuführung von Druckluft aus einer Druckluftquelle für das Axiallager 5 verbunden ist.

Zur Dämpfung von axialen Bewegungen des Lagerelements 22 ist zwischen dem Flansch 24 und der Endfläche der Lagerhülse 12 ein ringförmiger Dämpfungskörper 35 angeordnet, der aus elastomerem Material besteht. Weiterhin ist die Buchse 23 mit einem elastomeren Dichtring 36 in dem Abschnitt kleineren Innendurchmessers der Stufenbohrung 25 gegenüber der Lagerhülse 13 abgedichtet. Axialbewegungen des Lagerelements 22 bewirken eine geringe Verformung des Dichtrings 36 und eine reibende Relativbewegung zwischen dem Dichtring 36 und der Buchse 23, wodurch Axialbewegungen des Lagerelements 22 gedämpft werden.

Der in dem Abschnitt größeren Durchmessers der Stufenbohrung 25 angeordnete Flansch 24 begrenzt die Gehäusekammer 29 und bildet mit seiner der Gegenlagerfläche 26 abgekehrten Unterseite eine dem Druck in der Gehäusekammer 29 ausgesetzte Wirkfläche 37. Die Wirkfläche 37 ist um ein Mehrfaches größer als der den Lagerspalt bildende Teil der Gegenlagerfläche 26 und so groß bemessen, dass die durch den Druck in der Gehäusekammer 29 auf die Wirkfläche 37 einwirkende Kraft einem Vielfachen des Gewichts des Rotors 2, z.B. dem vierfachen Rotorgewicht entspricht. Die Gegenlagerfläche 26 ist nur im Bereich des in der Fläche sehr viel kleineren Lagerspalts einer Druckkraft ausgesetzt, da die sich radial nach innen und radial nach außen an den Lagerspalt des Axiallagers 5 anschließenden Ringräume durch Abströmkanäle 38, 39 mit der Atmosphäre in Verbindung stehen und dadurch druckentlastet sind.

Um einen betriebsbereiten Zustand des Lagers 1 zu erreichen, wird gleichzeitig den Radiallagern 3, 4 und dem Axiallager 5 über die Anschlüsse 19, 33 Druckluft zugeführt. An den infolge der stehenden Anordnung des Rotors 2 nahezu unbelasteten Radiallagern 3, 4 wird der Rotor 2 durch die über die Kapillarbohrungen 14, 16 einströmende Druckluft in eine zentrische Lage gebracht. Am Axiallager 5 bewirkt der durch die einströmende Druckluft in der Gehäusekammer 29 ansteigende Druck ein Anpressen der Gegenlagerfläche 26 an die Lagerfläche 7 und unter gleichzeitigem Anheben des Rotors 2 ein Verschieben des Lagerelements 22 in Richtung der Lagerhülse 12 und gegen den Dämpfungskörper 35. Mit weiter steigendem Druck wird der nachgiebige Dämpfungskörper 35 elastisch verformt, bis schließlich eine obere Position des Lagerelements 22 erreicht ist, bei der der Luftdruck so hoch ist, dass die kapillaren Zuführkanäle 28 durchströmt werden und der Rotor 2 mit seiner Lagerfläche 7 von einem in dem Lagerspalt erzeugten Luftpolster getragen wird. Das Axiallager 5 ist nun betriebsbereit, wobei kontinuierlich Luft durch die Zuführkanäle 28 in den Lagerspalt gedrückt wird und die aus dem Lagerspalt entweichende Luft über die die Welle 6 umgebenden Ringspalte und die Abströmkanäle 38, 39 entweicht.

Im betriebsbereiten Zustand des Axiallagers 5 ist das Lagerelement 22 über den Dämpfungskörper 35 und den Dichtring 36 an den gehäusefesten Lagerhülsen 12, 13 abgestützt. Wenn sich durch Instabilität des Axiallagers 5 selbsterregte Schwingungen des Systems aus Rotor 2 und Lagerspalt ausbilden wollen, werden die Schwingungen durch das Lagerelement 22 gedämpft. Denn das Lagerelement 22 wird infolge der dabei im Lagerspalt auftretenden Druckänderungen ebenfalls axial bewegt, seine Bewegung wird aber durch den Dämpfungskörper 35 und den Dichtring 36 gedämpft und beeinflusst entsprechend das Schwingungssystem aus Rotor und Lagerspalt. Die Stabilitätsgrenze des Axiallagers 5 wird auf diese Weise zu wesentlich höheren Lagerdrücken hin verschoben und die Ausbildung des oben beschriebenen Lufthammereffekts wird unterbunden.

## Patentansprüche

1. Aerostatisches Lager (1) eines drehbaren Rotors (2), der eine Drehachse und eine sich zur Drehachse radial erstreckende Lagerfläche (7) aufweist, mit einem nicht drehbar in einer Bohrung eines Gehäuses (10) angeordneten Lagerelement (22), das eine mit der Lagerfläche (7) zusammenwirkende Gegenlagerfläche (26) und wenigstens einen in der Gegenlagerfläche (26) mündenden Zuführkanal (28) aufweist, wobei das Lagerelement (22) in Richtung der Drehachse gegen seine Lage im Gehäuse (10) bestimmende, einander entgegen gerichtete Kräfte bewegbar ist und mit einer der Gegenlagerfläche (26) abgewandten Seite eine Wirkfläche (37) bildet, die eine Gehäusekammer (29) für unter Druck zugeführte Luft begrenzt, von der der Zuführkanal (28) ausgeht, **dadurch gekennzeichnet, dass** die Wirkfläche (37) größer ist als die Gegenlagerfläche (26), und die axiale Bewegung des Lagerelements (22) auf der die Gegenlagerfläche (26) aufweisenden Seite durch einen im Gehäuse (10) angeordneten Anschlag begrenzt ist, der einen nachgiebigen Dämpfungskörper (35) aufweist, der mit dem Lagerelement (22) in Wirkeingriff ist und zur Schwingungsdämpfung der axialen Bewegungen des Lagerelements (22) ausgebildet ist.

2. Lager nach Anspruch 1, **dadurch gekennzeichnet, dass** in der Gehäusekammer (29) eine Druckfeder angeordnet ist, die das Lagerelement (22) gegen den Dämpfungskörper (35) drückt.

3. Lager nach Anspruch 1, **dadurch gekennzeichnet, dass** das Lagerelement (22) auf der Seite der Gegenlagerfläche (26) an einer ersten Feder und auf der der Gegenlagerfläche (26) abgewandten Seite an einer zweiten Feder abgestützt ist, dass die beiden Federn gegeneinander gespannt sind und dass wenigstens eine der Federn ein Dämpfungskörper ist.

4. Lager nach einem der vorhergehenden Ansprüche, **dadurch gekennzeichnet, dass** das Lagerelement (22) eine zylindrische Dichtfläche aufweist, an der es mittels eines Dichtrings (36) gegenüber dem Gehäuse (10) abgedichtet ist.

5. Lager nach einem der vorhergehenden Ansprüche, **dadurch gekennzeichnet, dass** der Dämpfungskörper (35) aus einem Elastomer besteht.

6. Lager nach einem der vorhergehenden Ansprüche, **dadurch gekennzeichnet, dass** der Dämpfungskörper (35) die Form eines Ringes hat.

7. Lager nach einem der vorhergehenden Ansprüche, **dadurch gekennzeichnet, dass** das Lagerelement (22) aus einer zylindrischen Buchse (23) und einem an einem Ende der Buchse (23) angeordneten, ringförmigen Flansch (24) besteht und in einer Stufenbohrung (25) im Gehäuse (10) gelagert ist.

8. Lager nach einem der vorhergehenden Ansprüche, **dadurch gekennzeichnet, dass** es ein den Rotor lagerndes aerostatisches Radiallager (3, 4) aufweist.

9. Lager nach einem der vorhergehenden Ansprüche, **dadurch gekennzeichnet, dass** die Drehachse vertikal ausgerichtet ist.

10. Verwendung eines Lagers (1) nach einem der vorhergehenden Ansprüche in einer Auswuchtmaschine zur Lagerung von Turboladerrotoren.

## Claims

1. An aerostatical bearing (1) of a rotary rotor (2) having an axis of rotation and a bearing surface (7) extending radially to the axis of rotation, with a bearing element (22) which is non-rotatably arranged in a bore of a housing (10) and includes a counter-bearing surface (26) cooperating with the bearing surface (7) and at least one supply channel (28) opening into the counter-bearing surface (26), with the bearing element (22) being movable in the direction of the axis of rotation in opposition to mutually opposing forces determining its position in the housing (10) and forming with one side facing away from the counter-bearing surface (26) an effective surface (37) which bounds a housing chamber (29) receiving pressurized air and including the outgoing supply channel (28), **characterized in that** the effective surface (37) is greater than the counter-bearing surface (26), and the axial movement of the bearing element (22) on the side including the counter-bearing surface (26) is limited by a stop arranged in the housing (10), said stop including a yielding damping body (35) which is in cooperative engagement with the bearing element (22) and configured to damp vibrations of the axial movements of the bearing element (22).

2. The bearing according to claim 1, **characterized in that** the housing chamber (29) accommodates a compression spring urging the bearing element (22) against the damping body (35).

3. The bearing according to claim 1, **characterized in that** the bearing element (22) takes support on a first spring on the side of the counter-bearing surface (26) and on a second spring on the side facing away from the counter-bearing surface (26), that said two springs are held in compression against each other, and that at least one of the springs is a damping body.

4. The bearing according to any one of the preceding claims, **characterized in that** the bearing element (22) includes a cylindrical sealing surface effecting a seal against the housing (10) by means of a sealing ring (36).

5. The bearing according to any one of the preceding claims, **characterized in that** the damping body (35) is made of an elastomeric material.

6. The bearing according to any one of the preceding claims, **characterized in that** the damping body (35) is shaped in the form of a ring.

7. The bearing according to any one of the preceding claims, **characterized in that** the bearing element (22) is comprised of a cylindrical bushing (23) and an annular flange (24) arranged at an end of said bushing (23) and is carried in a stepped bore (25) in the housing (10).

8. The bearing according to any one of the preceding claims, **characterized in that** it includes an aerostatical radial bearing (3, 4) carrying the rotor.

9. The bearing according to any one of the preceding claims, **characterized in that** the axis of rotation is vertically aligned.

10. The use of a bearing (1) according to any one of the preceding claims in a balancing machine for supporting turbocharger rotors.

## Revendications

1. Palier aérostatique (1) d'un rotor rotatif (2) comprenant un axe de rotation et une surface de palier (7) s'étendant radialement par rapport à l'axe de rotation, le palier comportant un élément de palier (22) qui est monté sans pouvoir tourner dans un alésage d'un carter (10) et qui comprend une surface de palier support (26) coopérant avec la surface de palier (7) et au moins un canal d'amenée (28) débouchant dans la surface de palier support (26), l'élément de palier (22) étant mobile dans la direction de l'axe de rotation à l'encontre de forces orientées en sens opposé entre elles et déterminant sa position dans le carter (10), et l'élément palier (22) formant avec une face opposée à la surface de palier support (26) une surface active (37) qui délimite une chambre de carter (29) pour de l'air amené sous pression, chambre de laquelle part le canal d'amenée (28), **caractérisé en ce que** la surface active (37) est plus grande que la surface de palier support (26), et le mouvement axial de l'élément de palier (22) est délimité sur la face comportant la surface de palier support (26) par une butée disposée dans le carter (10), laquelle butée comprend un corps d'amortissement (35) souple qui est en prise active avec l'élément de palier (22) et qui est conçu pour amortir les vibrations des mouvements axiaux de l'élément de palier (22).

2. Palier selon la revendication 1, **caractérisé en ce qu'**un ressort de pression est disposé dans la chambre de carter (29), lequel appuie l'élément de palier (22) contre le corps amortisseur (35).

3. Palier selon la revendication 1, **caractérisé en ce que** l'élément de palier (22) est en appui, sur la face de la surface de palier support (26), sur un premier ressort et, sur la face opposée à la surface de palier support (26), sur un deuxième ressort, **en ce que** les deux ressorts sont mis en tension l'un à l'encontre de l'autre et **en ce qu'**au moins un des ressorts est un corps amortisseur.

4. Palier selon l'une des revendications précédentes, **caractérisé en ce que** l'élément de palier (22) est muni d'une surface d'étanchéité cylindrique sur laquelle il est étanchéifié par rapport au carter (10) au moyen d'une bague d'étanchéité (36).

5. Palier selon l'une des revendications précédentes, **caractérisé en ce que** le corps amortisseur (35) est constitué d'un élastomère.

6. Palier selon l'une des revendications précédentes, **caractérisé en ce que** le corps amortisseur (35) présente la forme d'une bague.

7. Palier selon l'une des revendications précédentes, **caractérisé en ce que** l'élément de palier (22) est constitué d'un coussinet cylindrique (23) et d'une bride annulaire (24) disposée à une extrémité du coussinet (23) et il est logé dans un alésage étagé (25) dans le carter (10).

8. Palier selon l'une des revendications précédentes, **caractérisé en ce qu'**il est muni d'un palier aérostatique radial (3, 4) supportant le rotor.

9. Palier selon l'une des revendications précédentes, **caractérisé en ce que** l'axe de rotation est orienté verticalement

10. Utilisation d'un palier (1) selon l'une des revendications précédentes dans une machine d'équilibrage pour le logement de rotors de turbocompresseurs.
